Europäisches Patentamt

(19) European Patent Office

Office européen des brevets

(11) Numéro de publication: **0 066 510**
**B1**

(12) **FASCICULE DE BREVET EUROPEEN**

(45) Date de publication du fascicule du brevet:
14.08.85

(51) Int. Cl.⁴: **C 01 B 3/00, C 01 B 6/24**

(21) Numéro de dépôt: **82400951.8**

(22) Date de dépôt: **24.05.82**

(54) **Dispositif de stockage et de production d'hydrogène à partir d'un composé solide.**

(30) Priorité: **02.06.81 FR 8110882**

(43) Date de publication de la demande:
**08.12.82 Bulletin 82/49**

(45) Mention de la délivrance du brevet:
**14.08.85 Bulletin 85/33**

(84) Etats contractants désignés:
**BE DE GB IT NL**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Fecan, Jean-Claude, Résidence Les Chênes 5, Avenue R.Schumann-Le Burck, F-33700 Mérignac (FR)**
Inventeur: **Morin, Jean, 2, Avenue François Molé, F-92160 Antony (FR)**

(74) Mandataire: **Mongrédien, André et al, c/o BREVATOME 25, rue de Ponthieu, F-75008 Paris (FR)**

(56) Documents cités:
EP - A - 0 016 576
FR - A - 2 361 602
US - A - 4 147 536
US - A - 4 249 654

JOURNAL OF THE LESS-COMMON METALS, vol. 74, 1980, pages 271-277, Elsevier Sequoia S.A., Lausanne, Y., OSUMI et al.: "Development of mischmetal-nickel and titanium-cobalt hydrides for hydrogen storage"

## Description

La présente invention a pour objet un dispositif de stockage et de production d'hydrogène à partir d'un composé solide, qui présente un encombrement réduit et permette de stocker l'hydrogène sous faible pression (quelques dixièmes de bars à quelques bars) et sous faible volume.

Un grand nombre de dispositifs de stockage d'hydrogène sont constitués par des bouteilles métalliques dans lesquelles l'hydrogène est stocké sous forte pression. Ceci présente des inconvénients non négligeables pour la sécurité à cause des risques de fuite et d'explosion, ce qui oblige souvent à placer ces bouteilles à l'extérieur des bâtiments.

D'autres systèmes utilisent un composé solide capable de fixer l'hydrogène par hydruration. Dans la plupart des cas, ce composé se présente sous forme de poudre ou de grains placés à l'intérieur d'un récipient fermé comprenant une arrivée et une sortie d'hydrogène. Des moyens de chauffage, généralement extérieurs au récipient, permettent de chauffer le composé solide afin de provoquer le dégagement d'hydrogène.

Ces dispositifs, s'ils éliminent les risques d'explosion, présentent le défaut d'être assez encombrants d'une part parce que le composé se présente sous forme de poudre ou de grains et qu'il en faut une grande quantité pour stocker un volume d'hydrogène important, d'autre part parce que les moyens de chauffage sont extérieurs au récipient.

La présente invention a justement pour but d'éliminer ces inconvénients en proposant un dispositif intégré qui permette de stocker une grande quantité d'hydrogène sous un faible volume.

Selon la principale caractéristique du dispositif objet de l'invention, celui-ci, du genre de ceux dans lesquels le composé solide, placé à l'intérieur d'un récipient fermé, est un composé d'au moins une terre rare et d'un métal du groupe VIII de la classification périodique capable de fixer sélectivement l'hydrogène par hydruration, se caractérise en ce que ledit composé solide se présente sous une forme compacte et usinable.

Le composé utilise pour fixer l'hydrogène n'absorbe que ce dernier et il est insensible aux impuretés que le gaz pourrait contenir: c'est en ce sens qu'il faut entendre l'expression «fixer sélectivement l'hydrogène» utilisée ci-dessus.

Selon une autre caractéristique du dispositif objet de l'invention, le composé solide est de formule:

$$R_{1-x} R'_x M_{y-z} M'_z$$

R et R' étant des terres rares choisies dans le groupe des lanthanides, M un métal du groupe VIII de la classification périodique, M' un métal des groupes III, IV ou VII de la classification périodique, x un nombre compris entre 0 et 1, y un nombre compris entre 4,7 et 5,5 et z un nombre de 0 à 2.

Les terres rares R et R' sont de préférence choisies parmi le lanthane, le praséodyme, le noédyme, le samarium et le gadolinium. Parmi les métaux du groupe VIII, le nickel et le cobalt conviennent particulièrement bien dans le cadre de la présente invention, ceux-ci pouvant ou non être substitués par un métal M' des groupes III, IV ou VII tel que l'aluminium par exemple.

Selon une autre caractéristique du dispositif objet de l'invention, celui-ci comporte des moyens de chauffage permettant d'élever la température du composé solide une fois hydruré à une valeur suffisante pour provoquer le dégagement de l'hydrogène, lesdits moyens de chauffage étant placés à l'intérieur du récipient fermé.

Suivant un mode de réalisation préféré, le dispositif comporte un support pour le composé solide, ledit support, placé à l'intérieur du récipient fermé, étant de forme cylindrique et comportant sur sa face externe une ailette disposée en hélice de manière à définier un pas de vis. Avantageusement, le support à la forme d'un cylindre creux, les moyens de chauffage étant placés à l'intérieur de ce cylindre creux.

Dans ce cas, le composé solide se présente sous la forme d'une masse cylindrique filetée intérieurement de manière à pouvoir être vissée sur ladite ailette disposée en hélice.

Dans un mode particulier de réalisation, le composé solide est une masse de lanthane-nickel mise en forme à partir d'une poudre de granulométrie inférieure à 63 $\mu m$, compactée à température ambiante et sous une pression supérieure à 10 000 bars.

Enfin, suivant une dernière caractéristique du dispositif objet de l'invention, celui-ci comprend des moyens permettant de contrôler la sortie de l'hydrogène, qui consistent en une vanne se terminant par un pointeau et appliquée de manière étanche sur un siège de vanne à l'aide d'un ressort taré.

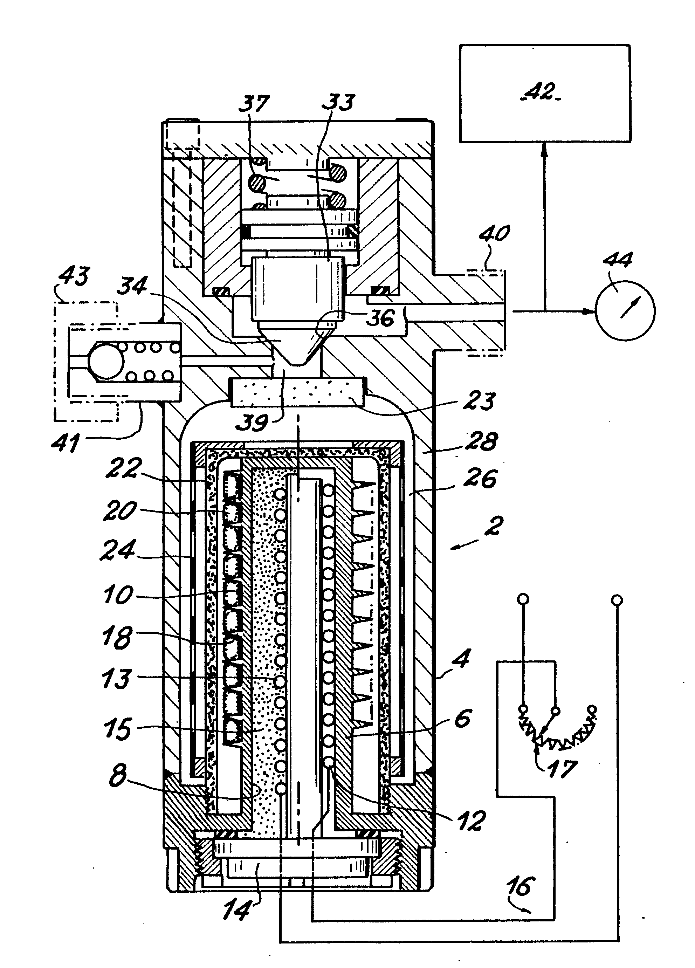

D'autres caractéristiques et avantages de l'invention ressortiront de la description qui va suivre, donnée à titre d'exemple purement illustratif et nullement limitatif, en référence au dessin annexé, lequel comporte une figure unique représentant une vue schématique en coupe du dispositif objet de l'invention.

Sur la figure, on voit que le dispositif, portant la référence générale 2, est essentiellement constitué par un récipient fermé 4 qui, dans l'exemple décrit ici, est de forme cylindrique. A l'intérieur de celui-ci est disposé un support métallique 6 ayant la forme d'un cylindre creux dont la paroi présente une face interne 8 et une face externe 10. Des moyens de chauffage, en l'occurrence une résistance électrique 12, sont disposés à l'intérieur du support 6 et en regard de la face interne 8 de celui-ci. La résistance 12 est reliée, au moyen de fils traversant la partie inférieure 14 du récipient 4, à un circuit électrique 16. Un rhéostat 17 permet de régler la puissance de chauffe de la résistance 12. Suivant les cas, on peut disposer les spires de la résistance 12 tout près de la paroi interne 8 du support 6, ou placer une résistance 13 au voisinage de l'axe du support 6 et interposer entre la résistance 13 et la face 8 un produit 15 capable de transmettre la chaleur.

La face externe 10 du support 6 est munie d'ailettes 18. Celles-ci jouent un double rôle: tout d'abord, elles servent de support au composé solide référencé 20. D'autre part, elles ont pour objet de transmettre la chaleur au composé solide lorsqu'on met en route la résistance électrique 12 pour provoquer le dégagement d'hydrogène.

Dans l'exemple décrit ici, le composé solide 20 est du lanthane-nickel LaNi₅ et il n'y a en fait qu'une seule ailette disposée en hélice autour du support 6: cette ailette définit ainsi un pas de vis sur lequel on vient visser la masse de lanthane-nickel. En effet, celui-ci se présente sous la forme d'une masse cylindrique, mise en forme à partir d'une poudre de granulométrie inférieure à 63 $\mu$m, compactée à 20°C et sous une pression de 13 000 bars et filetée intérieurement de manière à pouvoir être vissée sur l'ailette hélicoïdale 18. On peut éventuellement faire varier les conditions de mise en forme, mais celle-ci doit être réalisée à température ambiante et la pression de compactage doit être supérieure à 10 000 bars.

Il est bien entendu que d'autres dispositions sont possibles. On peut envisager par exemple un ensemble d'ailettes circulaires sur lesquelles sont disposées des couronnes de lanthane-nickel.

Sur la figure, on voit également, entourant le support 6, un filtre 22 qui a pour rôle d'éviter le passage éventuel de particules de lanthane-nickel au moment du dégagement de l'hydrogène. Dans l'exemple décrit ici, ce filtre est constitué par un tricot métallique en acier inoxydable maintenu par une tôle perforée 24. Dans une variante, on peut supprimer le filtre métallique cylindrique et le remplacer par une simple pastille filtrante 23 placée sur l'orifice de sortie de l'hydrogène. On voit enfin un espace 26 ménagé entre le filtre 22 et la paroi 28 du récipient 4 afin de permettre le passage de l'hydrogène, soit au moment du remplissage, soit au moment de l'utilisation.

Le dispositif comporte encore des moyens d'entrée de l'hydrogène qui sont constitués par un embout 41, muni d'une vanne 43, et qui peut être relié à un appareil de stockage d'hydrogène sous pression (non représenté).

Quant aux moyens permettant de contrôler la sortie de l'hydrogène, ils comprennent une vanne 33, se terminant par un pointeau 34 et appliquée de manière étanche sur un siège de vanne 36. Un ressort taré 37 maintient la vanne 33 en position de fermeture.

Lorsque celle-ci est en position ouverte (ressort 37 comprimé sous l'effet de la pression d'hydrogène), un passage 39 met en communication l'espace interne 26 du récipient avec un ambout de sortie 40, qui peut être relié à un appareil d'utilisation 42. Si nécessaire, un manomètre 44 peut être placé sur l'embout 40.

Le fonctionnement du dispositif selon l'invention est le suivant:

Pour le remplissage, la vanne 43 est ouverte et l'embout 41 relié à un appareil de stockage d'hydrogène sous pression. Le gaz est ainsi envoyé à travers l'espace 26 et le filtre 22 jusqu'au lanthane-nickel sur lequel il se fixe par hydruration. La réaction continue jusqu'à saturation du lanthane-nickel, ce qui correspond à une pression d'hydrogène de l'ordre de 5 à 7 bars dans l'espace 26. On ferme ensuite la vanne 43.

Lorsqu'on veut prélever l'hydrogène contenu dans le récipient 4, on ferme le circuit électrique 16 et la résistance électrique 12, réglable à l'aide du rhéostat 17, se met a chauffer. Le support 6 est chauffé à son tour, soit directement, soit par l'intermédiaire du produit 15 et la chaleur est transmise au lanthane-nickel grâce aux ailettes 18. La température de ce dernier augmente et l'hydrogène commence à être éliminé par déshydruration.

La pression de celui-ci dans l'espace 26 augmente et finit par soulever la vanne 33, comprimant le ressort 37: l'hydrogène passe donc à travers le passage 39 et l'embout 40 jusqu'à l'appareil d'utilisation 42.

Il convient de remarquer que si l'on maintient constante la puissance de chauffe, la température du lanthane-nickel reste constante et le dégagement d'hydrogène cesse lorsqu'on a atteint les conditions d'équilibre pour la réaction chimique de déshydruration. La vanne 33 se referme si on a réglé le tarage du ressort 37 à une pression supérieure à la pression d'équilibre de la réaction pour cette température-là.

Pour que le dégagement d'hydrogène continue, il faut manoeuvrer le théostat 17 pour augmenter encore la puissance de chauffe: la réaction est alors déplacée dans le sens du dégagement d'hydrogène, la pression augmente et la vanne 33 s'ouvre à nouveau.

On peut ainsi programmer la production d'hydrogène en tarant le ressort 37 à une pression suffisante et en programmant le réglage du rhéostat 17 en fonction du temps.

Le dispositif selon l'invention présente des avantages intéressants dont le principal est de pouvoir stocker l'hydrogène sous un faible volume puisque le composé solide se présente sous forme compacte et non pas sous forme de poudre ou de grains. De plus, le fait qu'il soit usinable permet des réalisations telles que celle qui vient d'être décrite où il est vissé sur un support à l'intérieur duquel sont disposés les moyens de chauffage: l'encombrement de l'ensemble est ainsi fortement réduit. D'autre part, le fait que l'hydrogène soit absorbé par un composé solide évite les risques de fuite et d'explosion des bouteilles classiques. Enfin, la sécurité est augmentée par la présence du ressort taré 37 puisque, même en cas d'élevation accidentelle de la température, une partie de l'hydrogène peut se dégager, mais on atteint rapidement les conditions d'équilibre et la vanne 33 se referme à nouveau.

Il est bien entendu que l'invention ne se limite pas au seul exemple de réalisation qui vient d'être décrit, mais qu'elle en couvre au contraire toutes les variantes.

## Revendications

1. Dispositif de stockage et de production d'hydrogène à partir d'un composé solide (20) placé à l'intérieur d'un récipient fermé (4), le composé solide (20) étant un composé d'au moins une terre rare et d'un métal du groupe VIII de la classification périodique capable de fixer sélectivement l'hydrogène par hydruration, caractérisé en ce que ledit composé solide (20) se présente sous une forme compacte et usinable et en ce que le dispositif comprend:

— des moyens de chauffage (12) permettant d'élever la température du composé solide (20) une fois hydruré à une valeur suffisante pour provoquer le dégagement de l'hydrogène, lesdits moyens de chauffage (12) étant placés à l'intérieur du récipient fermé (4), et

— des moyens permettant de contrôler la sortie de l'hydrogène, ces moyens consistant en une vanne (33) se terminant par un pointeau (34) et appliquée de manière étanche sur un siège de vanne (36) à l'aide d'un ressort taré (37).

2. Dispositif selon la revendication 1, caractérisé en ce qu'il comporte un support (6) pour le composé solide (20), ledit support (6), placé à l'intérieur du récipient fermé (4), étant de forme cylindrique et comportant sur sa face externe (10) une ailette (18) disposée en hélice de manière à définir un pas de vis.

3. Dispositif selon la revendication 2, caractérisé en ce que ledit support (6) a la forme d'un cylindre creux, les moyens de chauffage (12) étant placés à l'intérieur de ce cylindre creux.

4. Dispositif selon l'une quelconque des revendications 2 et 3, caractérisé en ce que le composé solide (20) se présente sous la forme d'une masse cylindrique filetée intérieurement de manière à pouvoir être vissée sur ladite ailette disposée en hélice (18).

5. Dispositif selon la revendication 4, caractérisé en ce que le composé solide (20) est une masse de lanthane-nickel mise en forme à partir d'une poudre de granulométrie inférieure à 63 $\mu$m, compactée à température ambiante et sous une pression supérieure à 10 000 bars.

**Patentansprüche**

1. Vorrichtung zur Speicherung und Erzeugung von Wasserstoff aus einer festen Verbindung (20), die im Innern eines geschlossenen Behälters (4) angeordnet ist, wobei es sich bei der festen Verbindung (20) um eine Verbindung mindestens einer Seltenen Erde und eines Metalls der Gruppe VIII des Periodischen Systems der Elemente handelt, die Wasserstoff durch Hydrierung selektiv festhalten kann, dadurch gekennzeichnet, dass die feste Verbindung (20) in einer kompakten und bearbeitbaren Form vorliegt und dass die Vorrichtung umfasst:

— Erwärmungseinrichtungen (12), welche die Erhöhung der Temperatur der festen Verbindung (20), wenn sie einmal hydriert ist, auf einen Wert erlaubt, der ausreicht, um die Freisetzung des Wasserstoffs hervorzurufen, wobei die Erwärmungseinrichtungen (12) im Innern des geschlossenen Behälters (4) vorgesehen sind, und

— Einrichtungen, welche die Kontrolle des Austritts des Wasserstoffs erlauben, die bestehen aus einem Schieber (33), der in einem Kegel (34) endet und mittels einer gespannten Feder (37) dicht auf einen Schiebersitz (36) aufgebracht ist.

2. Vorrichtung nach Anspruch 1, dadurch gekennzeichnet, dass sie umfasst einen Träger (6) für die feste Verbindung (20), wobei der Träger (6) im Innern des geschlossenen Behälters (4) angeordnet ist, eine zylindrische Form hat und auf seiner äusseren Oberfläche (10) einen Flügel (18) aufweist, der helixartig angeordnet ist, um ein Schraubgewinde zu definieren.

3. Vorrichtung nach Anspruch 2, dadurch gekennzeichnet, dass der Träger (6) die Form eines Hohlzylinders hat, wobei die Erwärmungseinrichtungen (12) im Innern dieses Hohlzylinders angeordnet sind.

4. Vorrichtung nach einem der Ansprüche 2 und 3, dadurch gekennzeichnet, dass die feste Verbindung (20) in Form einer zylindrischen Masse vorliegt, die im Innern mit einem Schraubgewinde versehen ist, so dass sie auf den helixartig angeordneten Flügel (18) aufgeschraubt werden kann.

5. Vorrichtung nach Anspruch 4, dadurch gekennzeichnet, dass die feste Verbindung (20) eine Lanthan-Nickel-Masse ist, die ausgehend von einem Pulver mit einer Kerngrösse unterhalb 63 $\mu$m geformt ist, welches bei Umgebungstemperatur und einem Druck über 10 000 bar verdichtet ist.

**Claims**

1. Apparatus for storing and producing hydrogen from a solid compound (20) located inside a closed container (4), the solid compound (20) being a compound of at least one rare earth, and an element of group VIII of the Periodic Table adapted to fix hydrogen selectively by hydride-formation, characterized in that said solid compound (20) is present in a compact and usable form, and in that the apparatus comprises:

— heating means (12) permitting elevation of the temperature of the solid compound (20) in its hydride form, to a value sufficient to produce hydrogen release said heating means (12) being located inside the closed container (4), and

— means for controlling emission of hydrogen, said means comprising a valve (33) ending in a valve-needle (34) and fixed in fluid tight manner on a valve seat (36) by means of a tared spring (37).

2. Apparatus according to Claim 1, characterized in that it comprises a support (6) for the solid compound (20), said support (6) located inside the closed container (4) having a cylindrical form, and having on its external surface (10) a helically-disposed fin (18), forming a screw thread.

3. Apparatus according to Claim 2, characterized in that said support (6) is a hollow cylinder, the heating means (12) being located inside the hollow cylinder.

4. Apparatus according to either of Claims 2 and 3, characterized in that the solid compound (20) comprises a cylindrical mass, internally threaded so as to be screwable onto said helically-formed fin (18).

5. Apparatus according to Claim 4, characterized in that the solid compound (20) is a mass of lanthanum-nickel formed from a powder having a particle size less than 63 $\mu$m, compacted at ambient temperature under a pressure greater than 10,000 bars.